# EUROPÄISCHE PATENTSCHRIFT

(11) **EP 0 639 737 B1**
(45) Veröffentlichungstag und Bekanntmachung des Hinweises auf die Patenterteilung: **07.01.1998**
(21) Anmeldenummer: 94112341.6
(22) Anmeldetag: 08.08.1994
(51) Int. Cl.: F16K 31/124

(54) **Pneumatischer oder hydraulischer Antrieb einer erdverlegten Armatur**
Hydraulic or pneumatic actuator for an underground valve
Commande hydraulique ou pneumatique pour un robinet sous-sol

(30) Priorität: 20.08.1993 CH 2495/93
(43) Veröffentlichungstag der Anmeldung: 22.02.1995
(73) Patentinhaber: Von Roll Holding AG, 4563 Gerlafingen (CH)
(72) Erfinder: Eugster, Dipl. Ing. Hans, CH-4710 Balsthal (CH)
(74) Vertreter: Ullrich, Gerhard, Dr.

(56) Entgegenhaltungen:
- DE-A- 3 331 746
- DE-C- 349 305
- DE-C- 4 014 474
- FR-A- 2 373 741
- US-A- 2 834 569
- US-A- 3 788 341

## Beschreibung

Die Erfindung betrifft eine Einrichtung zum Schliessen und Oeffnen einer erdverlegten Armatur gemäss dem Oberbegriff des Anspruchs 1. Solche Einrichtungen werden zum Sperren von z. B. Wasser- oder Gasleitungen im kommunalen Bereich bei Netzerweiterungen, Rohrbrüchen, Wartungsarbeiten u. a. verwendet.

Es sind Einrichtungen der angegebenen Art bekannt, welche unmittelbar manuell betätigbar sind. Sie sind gewöhnlich unter Strassen, Gehsteigen u. dgl. angeordnet und durch eine Einbaugarnitur mit Schutzrohr oder einen Schacht zugänglich, welche bzw. welcher an der Erdoberfläche durch eine Strassenkappe verschlossen ist. Die Antriebseinheit besteht in der Regel aus einer Spindelverlängerung, welche etwa mittels eines T-Schlüssels betätigbar ist.

Diese seit langem bekannten Einrichtungen haben gravierende Nachteile. Sie müssen stets so angeordnet sein, dass sie durch einen Schacht oder eine Einbaugarnitur zugänglich gemacht werden können, also gewöhnlich unter Fahrbahnen von Strassen, unter Gehsteigen oder Plätzen. Ausserdem beeinträchtigt der Schacht oder die Einbaugarnitur die thermische Isolation im Bereich der Armatur und vergrössert die Gefahr eines Einfrierens der Leitung.

Dass die Schächte gewöhnlich in Strassen eingebaut sind, hat zur Folge, dass die Betätigung der Einrichtung meist zu Verkehrsbehinderungen führt. Die Bedienung erfordert oft grossen Kraftaufwand und ist sehr unbequem und wegen des Strassenverkehrs unter Umständen auch gefährlich. Betätigung durch Unberechtigte kann nicht ausgeschlossen werden.

Hier soll die Erfindung Abhilfe schaffen. Die Erfindung, wie sie in den Ansprüchen gekennzeichnet ist, schafft eine Einrichtung zum Schliessen und Oeffnen einer erdverlegten Armatur, welche von einer räumlich von ihr getrennten Betätigungseinheit aus betätigt werden kann.

Die dadurch erreichten Vorteile sind zahlreich. Einerseits kann die Anordnung der Armatur viel freier als bisher gewählt werden. Sie kann ohne Schwierigkeiten unter Gebäuden, Aufschüttungen u. dgl. oder sonst in grösserer Tiefe verlegt werden. Andererseits kann der Standort der Betätigung frei und gut zugänglich gewählt werden. Ein Schacht oder eine Einbaugarnitur ist nicht erforderlich, was an sich schon die thermische Isolation verbessert, aber auch zusätzliche Massnahmen zu diesem Zweck ermöglicht. Ausserdem entfallen dadurch teure Anpassungen beim Aufbringen von zusätzlichen Belagschichten.

Betätigungen der Einrichtung verursachen keine Verkehrsbehinderung. Die Betätigung wird wesentlich erleichtert, da der oft erhebliche Kraftaufwand entfällt. Zugleich kann die Sicherheit gegen Fehlbedienung wie gegen Manipulationen durch Unberechtigte deutlich erhöht werden. Eine bequeme Ueberwachung des Schaltzustands kann ebenso wie weitere Verbesserungen und Erleichterungen, die im folgenden noch deutlicher werden sollen, leicht vorgesehen werden.

Im folgenden wird die Erfindung anhand von Zeichnungen, welche lediglich Ausführungsbeispiele darstellen, näher erläutert. Es zeigen
- Fig. 1: eine schematisierte Uebersichtsdarstellung einer erfindungsgemässen Einrichtung einschliesslich einer Armatur gemäss einer ersten Ausführungsform der Erfindung,
- Fig. 2: einen Schnitt durch eine Armatur mit Antriebseinheit der Einrichtung nach Fig. 1, links in der Stellung "offen", rechts in der Stellung "geschlossen",
- Fig. 3: einen Schnitt durch eine Betätigungseinheit der Einrichtung nach Fig. 1,
- Fig. 4a: eine Seitenansicht der Betätigungseinheit von Fig. 3, mit mobilem Druckspeicher,
- Fig. 4b: eine Draufsicht auf die Betätigungseinheit von Fig. 3, mit mobilem Druckspeicher,
- Fig. 5: einen Schnitt durch eine Schnellkupplung zwischen der Betätigungseinheit und dem mobilen Druckspeicher,
- Fig. 6a: ein Schaltschema der Einrichtung nach Fig. 1 im Schaltzustand "geschlossen",
- Fig. 6b: ein Schaltschema der Einrichtung nach Fig. 1 im Schaltzustand "offen",
- Fig. 7a: ein Schaltschema einer Einrichtung gemäss einer zweiten Ausführungsform der Erfindung im Schaltzustand "geschlossen",
- Fig. 7b: ein Schaltschema entsprechend Fig. 7a, Schaltzustand "offen",
- Fig. 8: einen Schnitt durch eine Antriebseinheit gemäss einer zweiten Ausführungsform in Schliessstellung,
- Fig. 9a: einen Schnitt durch eine Antriebseinheit gemäss einer dritten Ausführungsform, in Schliessstellung und
- Fig. 9b: einen Schnitt durch die Antriebseinheit nach Fig. 9a, in Offenstellung.

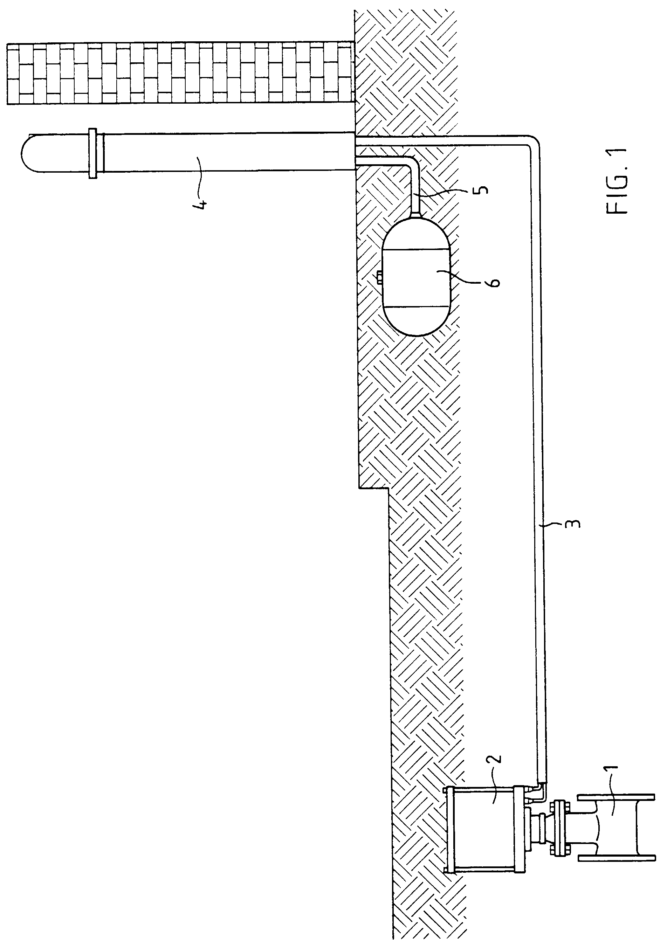

Eine in eine erdverlegte Leitung (nicht dargestellt) eingebaute Armatur 1 (Fig. 1) wird von einer oben an derselben angebauten, als Linearantrieb ausgebildeten, gekapselten und für Erdeinbau geeigneten Antriebseinheit 2 geschlossen und geöffnet. Sie ist über einen Verbindungsleitungsstrang 3 mit einer von Armatur und Antriebseinheit beabstandeten, insbesondere seitlich versetzten Betätigungseinheit 4 verbunden, gleich wie über eine Verbindungsleitung 5 ein in der Nähe der Betätigungseinheit 4 im Boden angeordneter Druckspeicher 6.

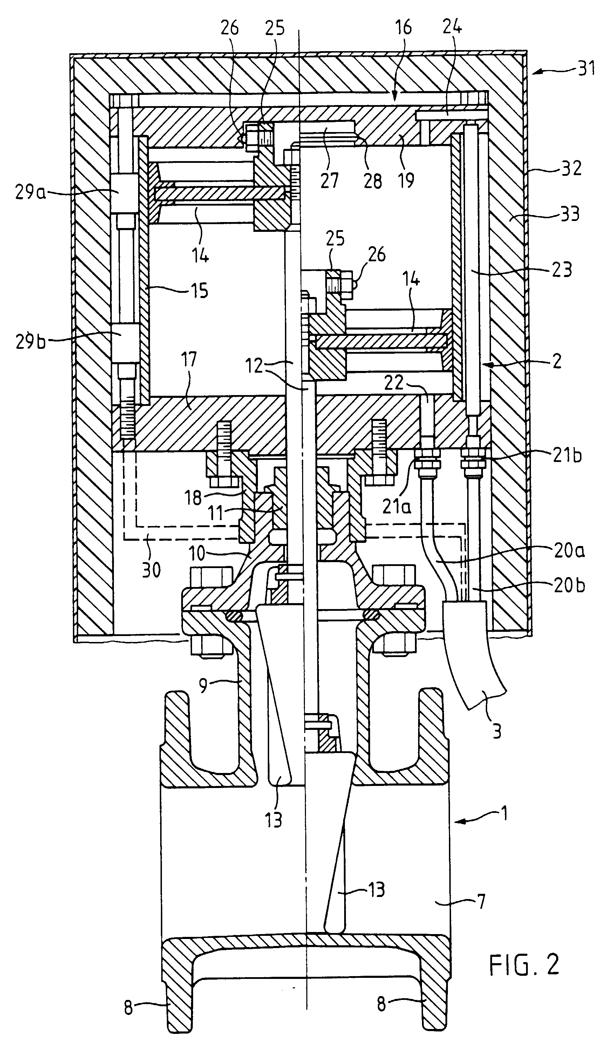

Die Armatur 1 umfasst (Fig. 2) einen Strömungskanal 7 mit Anschlussflanschen 8 für die erdverlegte Leitung - statt der Verbindung über die Anschlussflansche 8 kann auch beispielsweise eine Muffenverbindung vorgesehen sein - und ein nach oben abzweigendes Gehäuse 9, das durch ein Oberteil 10 mit einer Dichtungsbüchse 11 verschlossen ist. Eine Spindel 12 mit an ihrem unteren Ende einem Abschlusskörper 13 zum Schliessen und Oeffnen der Armatur 1 ist durch die Dichtungsbüchse 11 geführt. Die Spindel 12 ragt in die Antriebseinheit 2 und hat dort die Funktion einer Kolbenstange. Sie trägt an ihrem oberen Ende einen Kolben 14, der in einem Zylinder 15, der die Seitenwand eines Gehäuses 16 bildet, verschieblich gelagert ist. An seinem unteren Ende ist der Zylinder 15 durch eine Basisplatte 17 verschlossen, die auf einem am Gehäuse 9 der Armatur 1 abgestützten Support 18 befestigt ist und durch die die Spindel 12 gasdicht durchgeführt ist sowie an der Oberseite durch einen Deckel 19. Die Spindel 12 und der Support 18 stellen die einzigen Verbindungen zwischen der Armatur 1 und der Antriebseinheit 2 dar. Die Antriebseinheit kann auch in prinzipiell gleicher Weise seitlich an die Armatur angebaut sein.

Der Verbindungsleitungsstrang 3 zur Betätigungseinheit 4 enthält ein erstes Druckrohr 20a, das an einem ersten Anschluss 21a angeschlossen ist, welcher über eine Bohrung 22 durch die Basisplatte 17 am der Armatur 1 zugekehrten unteren Ende in das Innere des Gehäuses 16 mündet. Ein zweites Druckrohr 20b des Verbindungsleitungsstrangs 3 ist an einen zweiten Anschluss 21b angeschlossen, der - über ein Rohr 23 und einen Kanal 24 im Deckel 19 - schliesslich am der Armatur 1 abgekehrten oberen Ende in das Innere des Gehäuses 16 mündet. Die Anschlüsse 21a,b sind durch ihre Lage an der Unterseite des Gehäuses 16 besonders gut gegen mechanische Belastungen geschützt, auch beim diesbezüglich kritischen Zuschütten des Grabens nach dem Verlegen der Leitung oder einer Reparatur.

Der Kolben 14 trägt an seiner Oberseite einen Fortsatz 25 mit mindestens einer radialen Bohrung, aus welcher ein Stift 26 vorsteht, der durch eine Feder mit einer nach aussen wirkenden Kraft beaufschlagt ist. In der oberen Endstellung des Kolbens 14, entsprechend der stellung "offen" der Armatur 1, ragt der Fortsatz 25 in eine Ausnehmung 27 im Deckel 19, so dass der Stift 26 in einer umlaufenden Nut 28 an der Seitenwand der Ausnehmung 27 einrastet und mit dieser zusammen eine Schnappverriegelung bildet.

Aussen am Zylinder 15 sind im Bereich seines oberen Endes und seines unteren Endes Magnetschalter 29a,b angeordnet, welche registrieren, ob sich der Kolben 14 in seiner oberen oder seiner unteren Endstellung befindet, d. h. ob die Armatur 1 in der Stellung "offen" oder in der Stellung "geschlossen" ist. Von den Magnetschaltern 29a,b gehen elektrische Leitungen 30 aus, welche wie die Druckrohre 20a,b im Verbindungsleitungsstrang 3 zur Betätigungseinheit 4 gezogen sind.

Zur thermischen Isolation, die die Sicherheit gegen ein Einfrieren der Leitung verbessert wie auch zum Schutz gegen Nässe und mechanische Beschädigung ist über die Antriebseinheit 2 eine topfförmige Schutzhaube 31 gestülpt, welche sie oben und seitlich eng umgibt. Sie weist innerhalb einer Hülle 32 aus wasserdichter Folie eine Wärmeisolationsschicht 33 z. B. aus einem Schaumstoff auf. Der Verbindungsleitungsstrang 3 ist unter dem unteren Rand der Schutzhaube 31 durchgezogen. Die Anschlüsse 21a,b und die Druckrohre 20a,b sind so besonders gut geschützt und ein Eindringen von Feuchtigkeit in den Verbindungsleitungsstrang 3 ist praktisch ausgeschlossen.

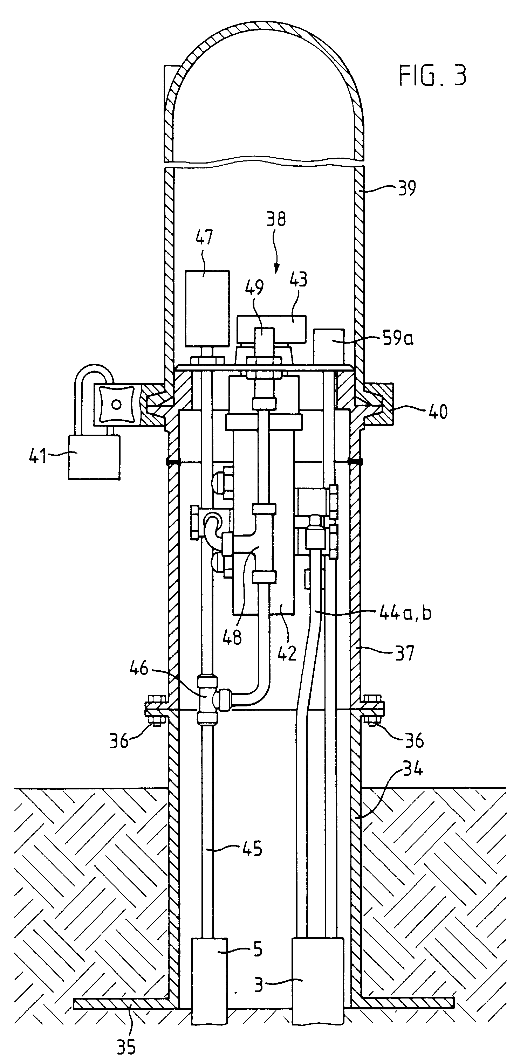

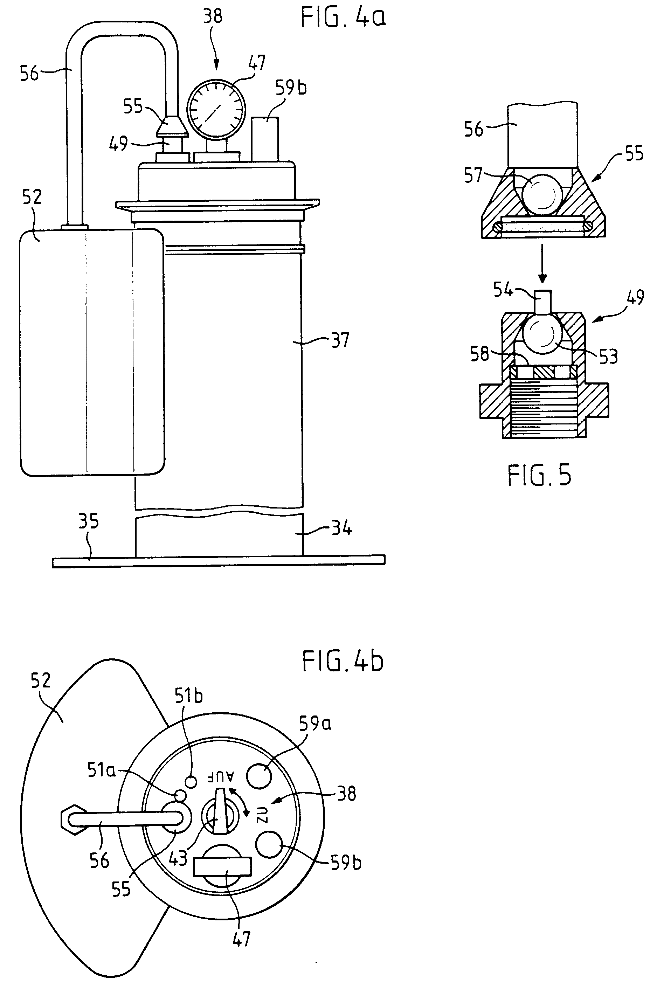

Die Betätigungseinheit 4 (Fig. 3; 4a,b) weist ein im Erdreich versenktes, nur geringfügig über die Erdoberfläche ragendes rohrförmiges Unterteil 34 auf mit an seinem unteren Ende einem Verankerungsflansch 35. Mittels Sollbruchschrauben 36 ist es mit einem Oberteil 37 verbunden, das eine Bedieneinheit 38 mit sämtlichen Anschlüssen, Betätigungs- und Anzeigeelementen enthält. Die Bedieneinheit 38 ist von einem kuppelförmigen Schutzdeckel 39 abgedeckt, der mittels eines Rings 40 am Oberteil 37 befestigt ist. Zur Erschwerung von Manipulationen durch Unbefugte ist der Ring 40 und damit der Schutzdeckel 39 durch ein Schloss 41 gesichert.

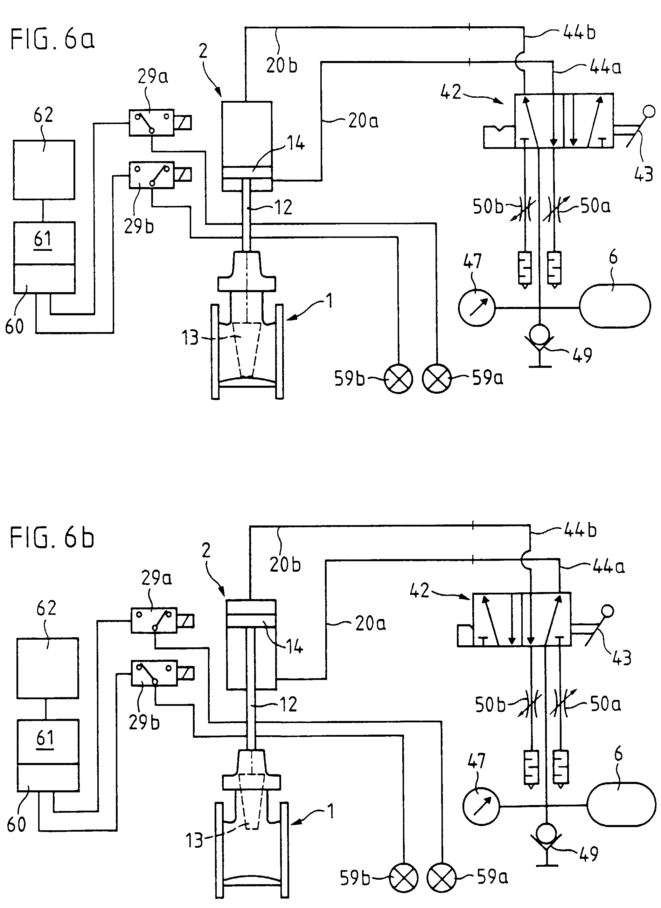

Unten an der Bedieneinheit 38 ist ein als 5/2-Wege-Ventil ausgebildetes Schaltventil 42 angebracht, welches mittels eines Schalthebels 43 der Bedieneinheit 38 betätigt werden kann. An das Schaltventil 42 sind flexible Druckschläuche 44a,b angeschlossen, welche am Anfang des Verbindungsleitungsstrangs 3 in die Druckrohre 20a,b übergehen, die zu den Anschlüssen 21a,b der Antriebseinheit 2 (Fig. 2) führen. Ein weiterer flexibler Druckschlauch 45 geht in ein Druckrohr (nicht dargestellt) über, das in der Verbindungsleitung 5 zum Druckspeicher 6 führt. Er schliesst an ein Verzweigungsstück 46 an, welches Verbindungen mit einem zur Bedieneinheit 38 gehörenden Manometer 47 als Druckanzeigeelement - es könnten auch andere Elemente zur visuellen Druckanzeige Verwendung finden, z. B. sogenannte Spione - und einem weiteren Verzweigungsstück 48 herstellt, das seinerseits mit einem weiteren Anschluss des Schaltventils 42 sowie mit einem Schnellanschluss 49 mit integriertem Rückschlagventil der Bedieneinheit 38 verbunden ist. Zwei weitere Anschlüsse des Schaltventils 42 führen über Drosselventile 50a,b (Fig. 6a,b), die durch Betätigungsschrauben 51a,b (Fig. 4b) an der Bedieneinheit verstellbar sind, zu Auslässen.

Der beschriebene Aufbau der Betätigungseinheit 4 mit dem Unterteil 34 und dem durch die Sollbruchschrauben 36 mit demselben verbundenen Oberteil 37 und den flexiblen Druckschläuchen 44a,b, 45, mittels derer die im Oberteil 37 verankerten Ventile und das Manometer 47 mit den Druckrohren verbunden sind, hat den grossen Vorteil, das ein Umstossen oder Umfahren der Betätigungseinheit 4 nicht zu einem Zusammenbruch des Systemdrucks führt und die Funktionsstellung der Armatur 1 nicht verändert wird. Die gleiche Wirkung kann, u. U. mit Nachteilen für die Bequemlichkeit der Bedienung, auch dadurch erreicht werden, dass die besagten Komponenten alle in Höhe des Bodens oder knapp über dem Boden angeordnet sind.

Der Schnellanschluss 49, welcher in der dargestellten Einrichtung zum Nachfüllen des Druckspeichers 6 z. B. aus einem mobilen Druckspeicher 52 (Fig. 4a,b) dient, enthält ein Kugelrückschlagventil mit einer Kugel 53 (Fig. 5), welche mit einem nach oben abstehenden Fortsatz 54 versehen ist. Sie wird vom Ueberdruck im Druckspeicher 6 in der dargestellten Position gehalten. Wird nun ein Anschlussstück 55 am Ende eines vom mobilen Druckspeicher 52 ausgehenden Druckrohrs 56, welches gleichfalls ein Kugelrückschlagventil mit einer Kugel 57 enthält,auf den Schnellanschluss 49 gesteckt, so wird, da der Druck im mobilen Druckspeicher 52 höher ist als im Druckspeicher 6, die Kugel 53 nach unten gedrückt, bis sie an einem Anschlaggitter 58 ansteht, so dass bei weiterer Abwärtsbewegung des Anschlussstücks 55 die Kugel 57 durch den Fortsatz 54 angehoben und die Verbindung zwischen dem mobilen Druckspeicher 52 und dem Druckspeicher 6 geöffnet und der letztere nachgefüllt wird. Ist der Druck im mobilen Druckspeicher 52 tiefer als im Druckspeicher 6, so wird nur die Kugel 57 angehoben, während das Rückschlagventil im Schnellanschluss 49 geschlossen bleibt. Der Schnellanschluss 49 und das Anschlussstück 55 bilden eine Schnellkupplung zwischen dem mobilen Druckspeicher 52 und dem ortsfesten Druckspeicher 6, die durch die Kraft, die das aufgesteckte Anschlussstück 55 aufgrund des Gewichtes des mobilen Druckspeichers 52 auf den Schnellanschluss 49 ausübt, geöffnet wird, während sie zugleich nach aussen dicht ist. Beim Abheben des Anschlussstücks 55 schliessen beidseits die Rückschlagventile.

Die von den Magnetschaltern 29a,b ausgehenden elektrischen Leitungen 30 (Fig. 2) führen z. T. zu Anzeigeelementen 59a,b an der Bedieneinheit 38, welche anzeigen, ob der Kolben 14 die obere oder untere Endstellung einnimmt. Die Stromversorgung der Magnetschalter 29a,b geht (Fig. 6a,b) von einem Akkumulator 60 aus, der über eine Steuereinheit 61 von Solarzellen 62 gespeist wird. Der Akkumulator 60, die Steuereinheit 61 und die Solarzellen 62 sind in die Betätigungseinheit 4 integriert.

In Figur 6a ist die Schaltstellung "geschlossen" dargestellt, wie sie am Ende eines Schliessvorgangs erreicht ist. Der Druckspeicher 6 ist über das Schaltventil 42, den Druckschlauch 44b und das anschliessende Druckrohr 20b mit dem Anschluss 21b (Fig. 2) verbunden. Gleichfalls über das Schaltventil 42 ist der Anschluss 21a über das Drosselventil 50a mit einem Auslass verbunden. Oberhalb des Kolbens 14 herrscht der Druck des Druckspeichers 6, unterhalb des Kolbens 14 Atmosphärendruck. Er wird damit in der unteren Endstellung gehalten. Dies wird durch den Magnetschalter 29b registriert und durch das Anzeigeelement 59b angezeigt. Die Armatur 1 ist durch den Abschlusskörper 13 geschlossen. Bei einem Zusammenbruch des Systemdrucks bleibt hier der Abschlusskörper 13 schon aufgrund seines Eigengewichts und desjenigen der Spindel 12 und des Kolbens 14 in der Stellung "geschlossen". Es ist möglich, zusätzlich eine Verriegelung vorzusehen.

Wird nun das Schaltventil 42 mittels des Schalthebels 43 umgestellt, so tritt die in Fig. 6b dargestellte Schaltstellung "offen" ein. Der Druck des Druckspeichers 6 wirkt nun über den Anschluss 21a (Fig. 2) auf die Unterseite des Kolbens 14, während der oberhalb desselben liegende Bereich mit einem Auslass verbunden ist. Der Kolben 14 wird angehoben, bis er die obere Endstellung erreicht, was durch den Magnetschalter 29a registriert und durch das Anzeigeelement 59a angezeigt wird. Bricht in der Schaltstellung "offen" der Systemdruck zusammen, so wird der Kolben 14 durch die zwischen demselben und dem Deckel 19 wirksame Schnappverriegelung in der oberen Endstellung festgehalten. Der Abschlusskörper 13 bleibt oben und die Armatur 1 offen.

Die Schliessbewegung erfolgt dem oben beschriebenen Oeffnen völlig analog. Die Geschwindigkeit beider Bewegungen können durch die einstellbaren Drosselventile 50a,b so gesteuert werden, dass keine gefährlichen Druckschläge auftreten können.

Die beschriebene Vorrichtung kann in vieler Hinsicht abgewandelt werden. So kann statt rein pneumatischer Energieversorgung und Antriebseinheit eine hydraulische oder gemischte Lösung vorgesehen werden. Bei der bevorzugten rein pneumatischen Einrichtung, wie sie oben beschrieben wurde, kann der Druckspeicher 6 im Unterteil 34 der Betätigungseinheit 4 untergebracht sein. Er kann auch fehlen; zur Betätigung der Einrichtung wird dann stets ein mobiler Druckspeicher oder eine andere Druckquelle verwendet.

Die Ausführung mit Druckspeicher 6 hat jedoch grosse Vorteile. Nicht nur ermöglicht sie, mehrere Schaltvorgänge wie beschrieben auf sehr bequeme Weise ohne äussere Druckzufuhr auszuführen, sie bietet auch die Möglichkeit, weitere Bedienungsvereinfachungen vorzusehen. So kann die Steuereinheit 61 so ausgebaut sein, dass sie Schaltbefehle, die über eine Telefonleitung oder Funk übertragen werden, auffangen und umsetzen kann. Sie kann auch einen Sender umfassen, der z. B. bei bestimmten Systemzuständen Signale aussendet, die von einer Zentrale empfangen und verarbeitet werden können. Mit einer derartigen Einrichtung kann sehr viel rascher als bisher z. B. auf einen Rohrbruch reagiert werden. Bei Fern- wie auch bei direkter Bedienung können Codes verwendet bzw. abgefragt werden, wodurch Manipulationen durch Unbefugte nahezu verunmöglicht werden.

Die Stromversorgung für die elektrischen Komponenten kann statt durch die Solarzellen 62 in Verbindung mit dem Akkumulator 60 auch ausschliesslich durch einen Akkumulator oder über eine elektrische Leitung erfolgen.

Statt durch einstellbare Drosselventile kann in einer einfacheren Ausführung die Schliesszeit durch Blenden fest eingestellt werden.

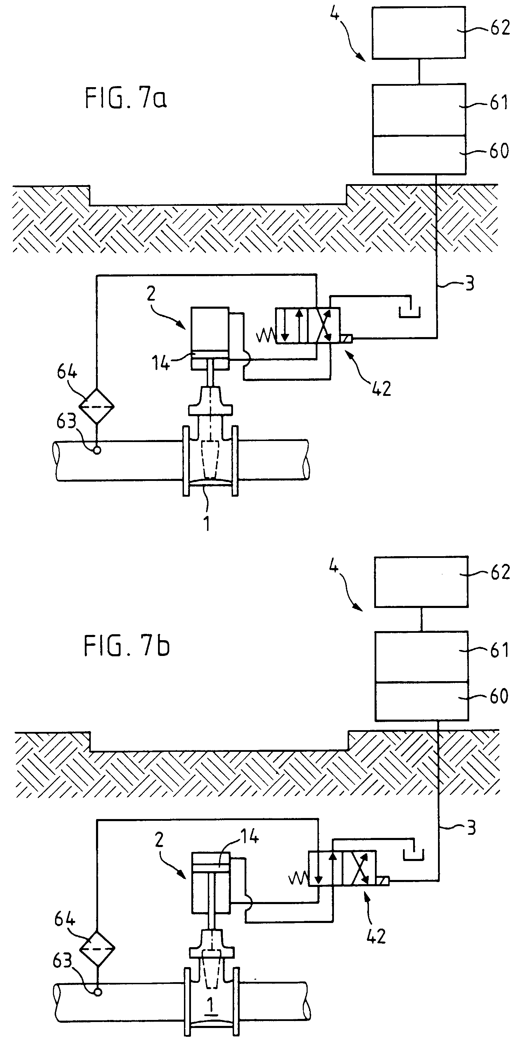

Eine weitere Variante der Energieversorgung ist den Fig. 7a,b zu entnehmen. Stromaufwärts der Armatur 1 zweigt von der Leitung ein Speiseanschluss 63 ab, welcher über einen Filter 64 mit einem Anschluss des Schaltventils 42 verbunden ist. Die Leitung dient als Druckquelle und liefert die für Schaltvorgänge erforderliche Energie.

In der in Fig. 7a dargestellten Schaltstellung "geschlossen" ist das Schaltventil 42 so geschaltet, dass es den Speiseanschluss 63 mit dem oberhalb des Kolbens 14 liegenden Bereich im Inneren der Antriebseinheit 2 verbindet. Der unterhalb des Kolbens liegende Bereich ist mit einem Auslass verbunden.

Zum Oeffnen der Armatur wird das Schaltventil umgestellt, so dass es den Speiseanschluss 63 mit dem unterhalb des Kolbens 14 liegenden Bereich verbindet und den oberhalb des Kolbens 14 liegenden Bereich mit dem Auslass (Fig. 7b), so dass der Kolben 14 angehoben und die Armatur geöffnet wird.

Die Armatur 1 und die Antriebseinheit 2 können dabei - je nach Art der Leitung - pneumatisch oder hydraulisch und im wesentlichen wie in Fig. 2 dargestellt aufgebaut sein. Das Schaltventil 42, das elektrisch umschaltbar ist, ist im Boden angeordnet, vorzugsweise an die Antriebseinheit 2 angebaut. Die Betätigungseinheit vereinfacht sich, da sie keine pneumatischen Elemente, sondern nur - neben dem Akkumulator 60, der Steuereinheit 61 und den Solarzellen 62 - Anzeigeelemente und einen elektrischen Schalter (nicht dargestellt) für die Betätigung des Schaltventils 42 aufzuweisen braucht. Der Verbindungsleitungsstrang 3 zwischen der Antriebseinheit 2 und der Betätigungseinheit 4 enthält dementsprechend nur elektrische Leitungen.

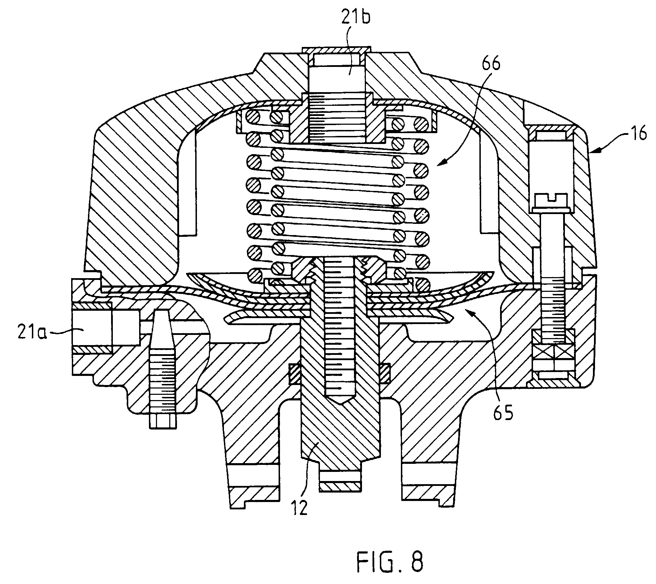

Unabhängig von der sonstigen Ausbildung der erfindungsgemässen Einrichtung kann die Antriebseinheit 2, falls nur geringer Hub erforderlich ist, statt als Kolbenantrieb gemäss Fig. 2 als Membranantrieb (Fig. 8) ausgebildet sein. Das Innere des Gehäuses 16 ist statt durch einen Kolben durch eine flexible Membran 65 in einen oberen und einen unteren Bereich geteilt. In den unteren Bereich mündet der Anschluss 21a, in den oberen der Anschluss 21b. Die Membran 65 trägt die Spindel 12 mit dem Abschlusskörper (nicht dargestellt). Der Membranantrieb kann im übrigen mit den weiteren Komponenten der Einrichtung in gleicher Weise verbunden sein wie der Kolbenantrieb.

Er kann allerdings auch als einfachwirkender Antrieb ausgebildet sein mit einer Federanordnung 66, welche auf die Membran 65 drückt, so dass, wenn an der Membran 65 keine Druckdifferenz anliegt, eine der Endstellungen - hier die untere, geschlossener Armatur entsprechende - als Grundstellung eingenommen wird. Die Ansteuerung kann dann vereinfacht werden. Es genügt ein 3/2-Wegeventil als Schaltventil 42. Der Anschluss 21b ist frei und dient nur dem Druckausgleich bei Bewegungen der Membran 65.

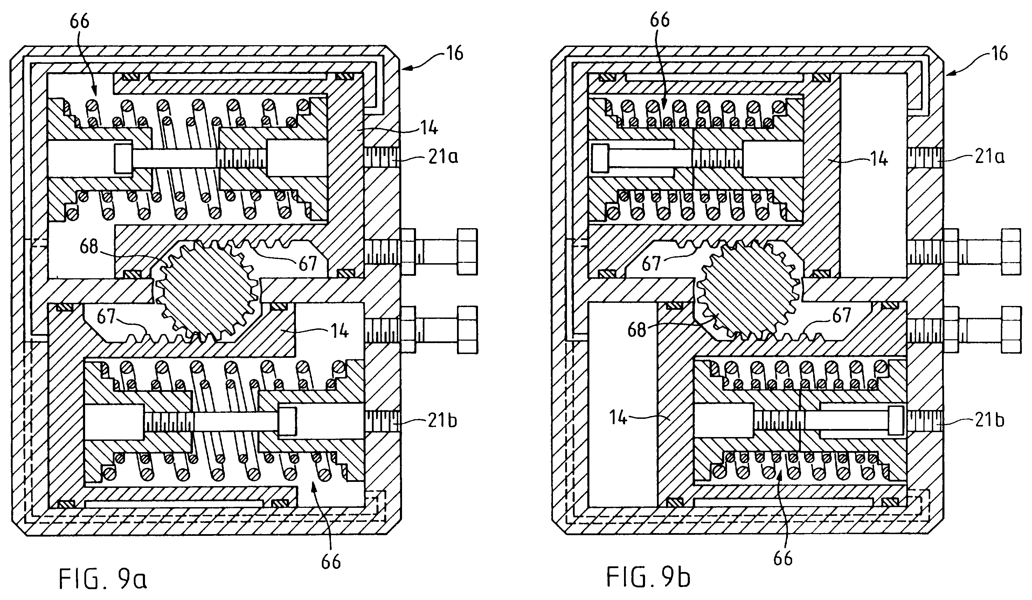

Wird in der Armatur 1 statt eines verschiebbaren ein schwenkbarer Abschlusskörper eingesetzt, sc kann als Antriebseinheit ein Schwenkantrieb verwendet werden, wie er in Fig. 9a, 9b in seinen beiden Endstellungen dargestellt ist. In seinem Gehäuse 16 mit Anschlüssen 21a,b sind zwei Kolben 14 gegenläufig verschiebbar gelagert. Ihre Bewegung wird durch Zahnstangen 67 und ein Zahnrad 68 auf eine Schwenkwelle (nicht dargestellt) übertragen, auf der das Zahnrad 68 befestigt ist und welche den schwenkbaren Abschlusskörper trägt. Die Grundstellung des Schwenkantriebs, die der Schliessstellung (Fig. 9a) entspricht, wird durch Federanordnungen 66 bestimmt.

## Patentansprüche

1. Einrichtung zum Schliessen und Oeffnen einer erdverlegten Armatur (1) mittels einer an dieselbe angebauten Antriebseinheit (2), **dadurch gekennzeichnet, dass** sie eine von der Antriebseinheit (2) räumlich getrennte Betätigungseinheit (4) umfasst, welche mindestens zum Teil an oder über dem Boden angeordnet und durch mindestens einen der Uebertragung von Energie oder Steuersignalen für die Betätigung der Armatur (1) dienenden Verbindungsleitungsstrang (3) mit der Antriebseinheit (2) verbunden ist, welche einen pneumatischen oder hydraulischen Antrieb mit einem durch einseitige Druckbeaufschlagung auslenkbaren Element sowie mit mindestens einem ersten Anschluss (21a) enthält, der zur Betätigung der Armatur (1) über ein von der Betätigungseinheit (4) aus betätigbares Schaltventil (42) mit Druck aus einer Druckquelle beaufschlagbar ist.

2. Einrichtung nach Anspruch 1, **dadurch gekennzeichnet, dass** als Druckquelle ein Anschluss für Druckzufuhr von aussen an der Betätigungseinheit (4) angeordnet ist.

3. Einrichtung nach Anspruch 2, **dadurch gekennzeichnet, dass** der Anschluss als Schnellanschluss (49) mit einem Rückschlagventil ausgebildet ist.

4. Einrichtung nach einem der Ansprüche 1 bis 3, **dadurch gekennzeichnet, dass** als Druckquelle ein Druckspeicher (6) vorhanden ist.

5. Einrichtung nach Anspruch 4, **dadurch gekennzeichnet, dass** der Druckspeicher (6) mit einem Anschluss an der Betätigungseinheit (4) verbunden ist.

6. Einrichtung nach den Ansprüchen 3 und 5, **dadurch gekennzeichnet, dass** der Druckspeicher (6) mit dem Schnellanschluss (49) verbunden ist.

7. Einrichtung nach einem der Ansprüche 3 bis 6, **dadurch gekennzeichnet, dass** sie mindestens einen mobilen Druckspeicher (52) mit einem Anschlussstück (55) umfasst, welches mit dem Schnellanschluss (49) eine Schnellkupplung bildet, die durch Anpressen des Anschlusstücks (55) an den Schnellanschluss (49) geöffnet werden kann und zugleich nach aussen dicht ist.

8. Einrichtung nach Anspruch 7, **dadurch gekennzeichnet, dass** das Eigengewicht des mobilen Druckspeichers (52) einen zum Oeffnen der Schnellkupplung ausreichenden Anpressdruck zwischen dem Anschlussstück (55) und dem Schnellanschluss (49) erzeugt.

9. Einrichtung nach Anspruch 1, **dadurch gekennzeichnet, dass** als Druckquelle ein stromaufwärts der Armatur (1) angeordneter Speiseanschluss (63) an der erdverlegten Armatur dient.

10. Einrichtung nach einem der Ansprüche 1 bis 9, **dadurch gekennzeichnet, dass** das Schaltventil (42) mindestens als 3/2-Wegeventil ausgebildet ist, welches mindestens den ersten Anschluss (21a) der Antriebseinheit (2) mit einem Auslass verbinden kann.

11. Einrichtung nach Anspruch 10, **dadurch gekennzeichnet, dass** eine Druckbeaufschlagung des ersten Anschlusses (21a) der Antriebseinheit (2) ein Oeffnen der erdverlegten Armatur bewirkt und die Antriebseinheit (2) mindestens einen zweiten Anschluss (21b) aufweist, dessen Druckbeaufschlagung ein Schliessen der Armatur bewirkt und das Schaltventil (42) mindestens als 4/2-Wegeventil ausgebildet ist, welches den ersten Anschluss (21a) mit der Druckquelle und zugleich den zweiten Anschluss (21b) mit einem Auslass oder den zweiten Anschluss (21b) mit der Druckquelle und zugleich den ersten Anschluss (21a) mit einem Auslass verbinden kann.

12. Einrichtung nach einem der Ansprüche 1 bis 11, **dadurch gekennzeichnet, dass** die Antriebseinheit (2) mindestens eine Verriegelung zur Arretierung des auslenkbaren Elements in einer Endstellung aufweist.

13. Einrichtung nach Anspruch 12, **dadurch gekennzeichnet, dass** die mindestens eine Verriegelung als Schnappverriegelung ausgebildet ist.

14. Einrichtung nach einem der Ansprüche 1 bis 12, **dadurch gekennzeichnet, dass** die Antriebseinheit (2) eine Federanordnung (66) enthält zur Beaufschlagung des auslenkbaren Elements mit einer gegen eine Grundstellung gerichteten Kraft.

15. Einrichtung nach einem der Ansprüche 1 bis 14, **dadurch gekennzeichnet, dass** die Antriebseinheit (2) mindestens einen Endschalter umfasst, welcher zur Anzeige, ob sich das auslenkbare Element in einer Endstellung befindet, mit einem Anzeigeelement (56a, 59b) an der Betätigungseinheit (4) verbunden ist.

16. Einrichtung nach einem der Ansprüche 1 bis 15, **dadurch gekennzeichnet, dass** allfällig in der Betätigungseinheit (4) eingebaute Ventile an oder unter dem Boden angeordnet sind.

17. Einrichtung nach einem der Ansprüche 1 bis 16, **dadurch gekennzeichnet, dass** die Betätigungseinheit (4) eine oberhalb des Bodens angeordnete Bedieneinheit (38) aufweist, an welcher sämtliche allfälligen Anschlüsse, Betätigungselemente zur Betätigung von Ventilen und Anzeigeelemente angeordnet sind.

18. Einrichtung nach Anspruch 17, **dadurch gekennzeichnet, dass** die Betätigungseinheit (4) einen über dem Boden liegenden Oberteil (37), welcher die Bedieneinheit (38) enthält und einen im Boden verankerten, höchstens geringfügig über denselben ragenden Unterteil (34) umfasst, mit welchem der Oberteil (37) über eine Sollbruchzone verbunden ist und dass allfällig im Oberteil (37) angeordnete Ventile mittels flexibler Druckschläuche (44a, 44b, 45) an erdverlegte Druckrohre (20a, 20b) angeschlossen sind.

19. Einrichtung nach einem der Ansprüche 1 bis 18, **dadurch gekennzeichnet, dass** die Betätigungseinheit (4) eine elektrische Steuereinheit (61) umfasst.

20. Einrichtung nach Anspruch 19, **dadurch gekennzeichnet, dass** die Betätigungseinheit (4) zur Stromversorgung mit einem Akkumulator (60) ausgerüstet ist.

21. Einrichtung nach Anspruch 20, **dadurch gekennzeichnet, dass** die Betätigungseinheit (4) mit Solarzellen (62) zur Aufladung des Akkumulators (60) ausgerüstet ist.

22. Einrichtung nach einem der Ansprüche 1 bis 21, **dadurch gekennzeichnet, dass** die Antriebseinheit (2) oberhalb der erdverlegten Armatur angeordnet und oben wie seitlich von einer nässe- und wärmeisolierenden Schutzhaube (31) umgeben ist.

23. Einrichtung umfassend eine Armatur (1) sowie eine Einrichtung nach einem der Ansprüche 1 bis 22 zum Schliessen und Oeffnen derselben.

## Claims

1. A device for closing and opening a fitting (1) which is buried underground by means of a drive unit (2) attached thereto, characterised in that the said device comprises an operating unit (4), spatially separate from the drive unit (2), which is arranged at least partially on or above the ground and is connected to the drive unit (2) by at least one continuous connecting line (3) which serves to convey energy or control signals to operate the fitting (1), the said drive unit containing a pneumatic or hydraulic drive comprising an element which may be displaced by the action of pressure on one side thereof and at least one first connection (21a) which may be acted upon by pressure from a pressure source to operate the fitting (1) by way of a pilot valve (42) operable from the operating unit (4).

2. A device according to claim 1, characterised in that a connection for supplying pressure from the outside is arranged on the operating unit (4) to serve as the pressure source.

3. A device according to claim 2, characterised in that the connection is a quick-release connection (49) comprising a non-return valve.

4. A device according to one of claims 1 to 3, characterised in that a pressure reservoir (6) is provided as the pressure source.

5. A device according to claim 4, characterised in that the pressure reservoir (6) is connected to a connection on the operating unit (4).

6. A device according to claims 3 and 5, characterised in that the pressure reservoir (6) is connected to the quick-release connection (49).

7. A device according to one of claims 3 to 6, characterised in that it includes at least one mobile pressure reservoir (52) with a connector (55) which forms a quick-release coupling with the quick-release connection (49), which coupling may be opened by pushing the connector (55) onto the quick-release connection (49) and at the same time is sealed from the outside.

8. A device according to claim 7, characterised in that the own weight of the mobile pressure reservoir (52) produces a bearing pressure between the connection piece (55) and the quick-release connection (49) which is sufficient to open the quick-release coupling.

9. A device according to claim 1, characterised in that a feed connection (63) on the underground fitting which is arranged upstream of the fitting (1) serves as the pressure source.

10. A device according to one of claims 1 to 9, characterised in that the pilot valve (42) is at least a 3/2-way valve which can connect at least the first connection (21a) of the drive unit (2) to an outlet.

11. A device according to claim 10, characterised in that the action of pressure on the first connection (21a) of the drive unit (2) causes the underground fitting to open and the drive unit (2) has at least one second connection (21b) on which the action of pressure causes the fitting to close, and the pilot valve (42) is at least a 4/2-way valve which can connect the first connection (21a) to the pressure source and at the same time the second connection (21b) to an outlet, or the second connection (21b) to the pressure source and at the same time the first connection (21a) to an outlet.

12. A device according to one of claims 1 to 11, characterised in that the drive unit (2) has at least one locking mechanism to secure the displaceable element in an end position.

13. A device according to claim 12, characterised in that the at least one locking mechanism is a snap-action locking mechanism.

14. A device according to one of claims 1 to 12, characterised in that the drive unit (2) contains a spring arrangement (66) to act on the displaceable element with a force which is directed towards a base position.

15. A device according to one of claims 1 to 14, characterised in that the drive unit (2) comprises at least one limit switch which is connected to an indicating element (56a, 59b) on the operating unit (4) to indicate whether the displaceable element is in an end position.

16. A device according to one of claims 1 to 15, characterised in that any valves which are fitted in the operating unit (4) are arranged on or underneath the ground.

17. A device according to one of claims 1 to 16, characterised in that the operating unit (4) has an operator's unit (38) arranged above the ground on which all the possible connections, operating elements for operating valves and indicating elements are arranged.

18. A device according to claim 17, characterised in that the operating unit (4) comprises an upper part (37) located above ground which contains the operator's unit (38), and a lower part (34), anchored in the ground and projecting at most slightly thereabove, to which the upper part (37) is connected by way of a predetermined breaking zone, and in that any valves arranged in the upper part (37) are connected to underground pressure pipes (20a, 20b) by means of flexible pressure hoses (44a, 44b, 45).

19. A device according to one of claims 1 to 18, characterised in that the operating unit (4) comprises an electrical control unit (61).

20. A device according to claims 19, characterised in that the operating unit (4) is equipped with an accumulator (60) for the power supply.

21. A device according to claim 20, characterised in that the operating unit (4) is equipped with solar cells (62) to charge the accumulator (60).

22. A device according to one of claims 1 to 21, characterised in that the drive unit (2) is arranged on top of the underground fitting and is enclosed upwardly as well as laterally by a moisture- and heat-insulating protective cap (31).

23. A device comprising a fitting (1) and a device according to one of claims 1 to 22 for closing and opening it.

## Revendications

1. Dispositif de fermeture et d'ouverture d'une vanne enterrée (1) au moyen d'une unité d'entraînement (2) montée sur celle-ci,
caractérisé en ce qu'il comprend une unité de commande (4) physiquement séparée de l'unité d'entraînement (2), qui est au moins partiellement disposée au niveau de ou au-dessus du sol et est reliée à l'unité d'entraînement (2) par l'intermédiaire d'au moins un tronçon de conduite de liaison (3) servant à transmettre de l'énergie ou des signaux de commande pour l'actionnement de la vanne (1), l'unité d'entraînement comprenant un entraînement pneumatique ou hydraulique ayant un élément mobile pouvant être déplacé par application unilatérale d'une pression, ainsi qu'au moins un premier raccord (21a) qui, pour actionner la vanne (1), peut être alimenté en pression à partir d'une source de pression via une soupape de commutation (42) pouvant être commandée à partir de l'unité de commande (4).

2. Dispositif selon la revendication 1, caractérisé en ce que la source de pression est prévue sous forme d'un raccord disposé sur l'unité de commande (4), permettant une alimentation en pression de l'extérieur.

3. Dispositif selon la revendication 2, caractérisé en ce que le raccord est réalisé sous forme d'un raccord rapide (49) muni d'un clapet de non-retour.

4. Dispositif selon l'une des revendications 1 à 3, caractérisé en ce qu'un accumulateur de pression (6) est prévu pour constituer la source de pression.

5. Dispositif selon la revendication 4, caractérisé en ce que l'accumulateur de pression (6) est relié à un raccord monté sur l'unité de commande (4).

6. Dispositif selon les revendications 3 et 5, caractérisé en ce que l'accumulateur de pression (6) est relié au raccord rapide (49).

7. Dispositif selon l'une des revendications 3 à 6, caractérisé en ce qu'il comprend au moins un accumulateur de pression mobile (52) comportant un embout de raccordement (55) qui, en conjonction avec le raccord rapide (49), forme un accouplement rapide qui peut être ouvert par serrage de l'embout de raccordement (55) sur le raccord rapide (49) et assure en même temps 1' étanchéité vers l'extérieur.

8. Dispositif selon la revendication 7, caractérisé en ce que le poids propre de l'accumulateur de pression mobile (52) produit une pression de serrage suffisante entre l'embout de raccordement (55) et le raccord rapide (49), pour ouvrir l'accouplement rapide.

9. Dispositif selon la revendication 1, caractérisé en ce que la source de pression est constituée par un branchement d'alimentation (63) disposé en amont de la vanne (1), relié à la vanne enterrée.

10. Dispositif selon l'une des revendications 1 à 9, caractérisé en ce que la soupape de commutation (42) est au moins configurée comme un distributeur 3/2 voies pouvant relier au moins le premier raccord (21a) de l'unité d'entraînement (2) à une sortie.

11. Dispositif selon la revendication 10, caractérisé en ce qu'une mise sous pression du premier raccord (21a) de l'unité d'entraînement (2) a pour effet une ouverture de la vanne enterrée, et que l'unité d'entraînement (2) comporte au moins un deuxième raccord (21b) dont la mise sous pression a pour effet la fermeture de la vanne, et que la soupape de commutation (42) est au moins réalisée sous forme d'un distributeur 4/2 voies, qui peut soit relier le premier raccord (21a) à la source de pression en reliant en même temps le second raccord (21b) à une sortie, soit relier le second raccord (21b) à la source de pression en reliant en même temps le premier raccord (21a) à une sortie.

12. Dispositif selon l'une des revendications 1 à 11, caractérisé en ce que l'unité d'entraînement (2) comporte au moins un verrouillage permettant d'immobiliser l'élément mobile dans une position de fin de course.

13. Dispositif selon la revendication 12, caractérisé en ce que ledit au moins un verrouillage est réalisé sous forme d'un verrouillage à enclenchement.

14. Dispositif selon l'une des revendications 1 à 12, caractérisé en ce que l'unité d'entraînement (2) comporte un système à ressort (66) destiné à appliquer à l'élément mobile une force dirigée vers une position de repos.

15. Dispositif selon l'une des revendications 1 à 14, caractérisé en ce que l'unité d'entraînement (2) comporte au moins un contacteur de fin de course qui est relié à un élément indicateur (56a, 59b) de l'unité de commande (4) en vue de donner une indication si l'élément mobile se trouve dans une position de fin de course.

16. Dispositif selon l'une des revendications 1 à 15, caractérisé en ce que des soupapes éventuellement installées dans l'unité de commande (4) sont placées au niveau ou en dessous du sol.

17. Dispositif selon l'une des revendications 1 à 16, caractérisé en ce que l'unité de commande (4) comporte une unité de contrôle (38) située au-dessus du sol, sur laquelle sont agencés tous les raccords, éléments d'actionnement destinés à actionner des soupapes et éléments indicateurs éventuels.

18. Dispositif selon la revendication 17, caractérisé en ce que l'unité de commande (4) comporte une partie supérieure (37) située au-dessus du sol, contenant l'unité de contrôle (38), et une partie inférieure (34) ancrée dans le sol, ne dépassant, tout au plus, que légèrement au-dessus du sol, à laquelle la partie supérieure (37) est reliée par l'intermédiaire d'une zone affaiblie de rupture, et en ce que des soupapes éventuellement présentes dans la partie supérieure (37) sont raccordées à des tubes de pression enterrés (20a, 20b) par l'intermédiaire de tuyaux flexibles (44a, 44b, 45).

19. Dispositif selon l'une des revendications 1 à 18, caractérisé en ce que l'unité de commande (4) comporte une unité de pilotage électrique (61).

20. Dispositif selon la revendication 19, caractérisé en ce que l'unité de commande (4) est équipée d'un accumulateur (60) en vue d'assurer l'alimentation en courant.

21. Dispositif selon la revendication 20, caractérisé en ce que l'unité de commande (4) est équipée de cellules solaires (62) permettant de recharger l'accumulateur.

22. Dispositif selon l'une des revendications 1 à 21, caractérisé en ce que l'unité d'entraînement (2) est disposée au-dessus de la vanne enterrée et est entourée, en haut et sur les côtés, d'un capot de protection (31) l'isolant de l'humidité et du froid.

23. Dispositif comprenant une vanne (1) ainsi qu'un dispositif selon l'une des revendications 1 à 22 pour la fermeture et l'ouverture de celle-ci.
